(19) Europäisches Patentamt

European Patent Office

Office européen des brevets

(11) **EP 0 739 908 B1**

(12) **EUROPÄISCHE PATENTSCHRIFT**

(45) Veröffentlichungstag und Bekanntmachung des Hinweises auf die Patenterteilung:
**16.08.2001 Patentblatt 2001/33**

(51) Int Cl.[7]: **C08F 10/02**, C08F 2/34, C08F 2/38, C08L 23/04, C08F 255/02

(21) Anmeldenummer: **96106354.2**

(22) Anmeldetag: **23.04.1996**

(54) **Ethylenpolymerisate hohe Dichter mit erhöhter Spannungsrissbeständigkeit und Verfahren zu ihrer Herstellung**

High density polyethylenes having improved stress-crack resistance and process for their preparation

Polyéthylène haute densité ayant une résistance élevée à la fissuration et procédé pour sa préparation

(84) Benannte Vertragsstaaten:
**AT BE CH DE ES FR GB LI LU NL**

(30) Priorität: **27.04.1995 DE 19515449**

(43) Veröffentlichungstag der Anmeldung:
**30.10.1996 Patentblatt 1996/44**

(73) Patentinhaber: **Buna Sow Leuna Olefinverbund GmbH 06258 Schkopau (DE)**

(72) Erfinder:
- **Schellenberg, Jürgen, Dr. 06132 Halle (DE)**
- **Kerrinnes, Heinz-Jürgen, Dr. 06128 Halle (DE)**
- **Hamann, Bernd, Dr. 06258 Schkopau (DE)**
- **Fritzsche, Gerd 06217 Merseburg (DE)**

(56) Entgegenhaltungen:
**EP-A- 0 340 566        FR-A- 2 270 273**

- **PATENT ABSTRACTS OF JAPAN vol. 095, no. 005, 30.Juni 1995 & JP 07 041524 A (SHOWA DENKO KK), 10.Februar 1995,**
- **PATENT ABSTRACTS OF JAPAN vol. 018, no. 037 (M-1545), 20.Januar 1994 & JP 05 269946 A (MITSUBISHI PETROCHEM CO LTD), 19.Oktober 1993,**
- **PATENT ABSTRACTS OF JAPAN vol. 011, no. 136 (C-419), 30.April 1987 & JP 61 272217 A (UBE IND LTD), 2.Dezember 1986,**
- **D. MUNTEANU, C. CSUNDERLIK: "Polyethylene-Bound Antioxidants" POLYMER DEGRADATION AND STABILITY, Bd. 34, 1991, Seiten 295-307, XP002055907**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft Ethylenpolymerisate hoher Dichte mit erhöhter Spannungsrißbeständigkeit und ein Verfahren zu ihrer Herstellung. Die Polymerisate können zur Fertigung verschiedenster Formkörper, beispielsweise Rohre, dienen.

Ethylenpolymerisate hoher Dichte zeichnen sich gegenüber anderen Ethylenpolymerisaten insbesondere durch eine hohe Steifigkeit aus. Dabei ist jedoch von Nachteil, daß sie eine vergleichsweise geringe Spannungsrißbeständigkeit aufweisen, bei der für viele Anwendungsgebiete eine Verbesserung wünschenswert ist.

Sehr gute Spannungsrißbeständigkeiten weisen Ethylenpolymerisate niedriger Dichte (LDPE) und bevorzugt lineare Ethylenpolymerisate niedriger Dichte (LLDPE) auf.

Zur Herstellung von gegebenen Ethylenpolymerisaten hoher Dichte mit verbesserter Spannungsrißbeständigkeit ist nun bekannt, dies durch Mischen von Ethylenpolymerisaten hoher Dichte mit linearen Ethylenpolymerisaten niedriger Dichte zu erreichen (z. B. Z. Zhou, X. Lu, N. Brown: Polymer 34 (1993) 2520). Dabei erweist es sich als nachteilig, daß zu einer deutlichen Erhöhung der Spannungsrißbeständigkeit relativ hohe Mengen an linearen Ethylenpolymerisaten niedriger Dichte zugesetzt werden müssen, die ihrerseits wieder zu einer starken Herabsetzung der Steifigkeit des Ethylenpolymerisates hoher Dichte führen. Ein Anteil von beispielsweise 1 Masseprozent eines linearen Ethylenpolymerisates niedriger Dichte im Gemisch mit einem Ethylenpolymerisat hoher Dichte führt hingegen nur zu einer maximalen Erhöhung der Spannungsrißbeständigkeit auf das ca. 1,029-fache des Ausgangswertes (a. a. O., S. 2523).

Der Erfindung liegt die Aufgabe zugrunde, Ethylenpolymerisate hoher Dichte und ein Verfahren zu ihrer Herstellung zu entwickeln, wobei auf der Grundlage gegebener Ethylenpolymerisate hoher Dichte bei hoher Steifigkeit und Zähigkeit eine erhöhte Spannungsrißbeständigkeit erzielt werden soll.

Erfindungsgemäß werden diese Ethylenpolymerisate hoher Dichte mit erhöhter Spannungsrißbeständigkeit dadurch hergestellt, daß ein Ethylenpolymerisat hoher Dichte mit einer Dichte bei 23 °C von 0,935 bis 0,970 g/cm$^3$ und einem Schmelzindex bei 190 °C und einer Belastung von 49 N von 0,01 bis 80 g/10 min in der Schmelze bei einer Temperatur von 160 bis 270 °C mit Reaktionszeiten, die dem Durchgang in Schneckenextrudern entsprechen, unter Zusatz von

A) 0,05 bis 5 Masseprozent, bezogen auf die Gesamtmischung, von (Meth)acrylaten mit einer C-Zahl in der Seitenkette von 2 bis 16 und einer Funktionalität bezüglich der polymerisationsfähigen Gruppen von 2 und

B) 0 bis 15 Masseprozent, bezogen auf die Komponente A), eines als Kettenüberträger wirksamen festen oder flüssigen Agens und

eingehender Homogenisierung der Mischung ohne Zusatz von Peroxiden umgesetzt wird.

Entsprechend der Erfindung kann das Ethylenpolymerisat hoher Dichte bevorzugt eine Dichte bei 23 °C von 0,940 bis 0,960 g/cm$^3$ aufweisen. Das Ethylenpolymerisat hoher Dichte kann vorzugsweise einen Schmelzindex bei 190 °C und einer Belastung von 49 N von 0,05 bis 35 g/10min besitzen.

Vorteilhaft kann die Mischung bei einer Temperatur von 180 bis 260 °C umgesetzt werden.

Weiterhin sind Verfahren bekannt, nach denen Acrylatverbindungen in Gegenwart von peroxidischen Radikalbildnern auf Polyethylen gepfropft werden und dabei Pfropfpolymerisate mit verbesserter Spannungsrißbeständigkeit entstehen (FR-A-2270273).

JP-A-07041524 offenbart eine Zusammensetzung zur Herstellung von Filmen, bei der Polyethylen mit Aminoacrylaten umgesetzt wird. Auch mit 3,5-ditert.-butyl-4-hydroxybenzylmethacrylat wurden entsprechende Untersuchungen angestellt ("Polymer Degradation and Stability",Bd. 34,1991,S.295-307). Als Komponente A) können besonders günstig 0,1 bis 2 Masseprozent, bezogen auf die Gesamtmischung, von (Meth)acrylaten eingesetzt werden. Gemäß der Erfindung können (Meth)acrylate mit einer C-Zahl in der Seitenkette von 4 bis 10 und einer Funktionalität bezüglich der polymerisationsfähigen Gruppen von 2 verwendet werden.

Der Erfindung entsprechend können als Komponente B) 0,1 bis 10 Masseprozent, bezogen auf die Komponente A), eines als Kettenüberträger wirksamen festen oder flüssigen Agens eingesetzt werden.

Solche als Kettenüberträger wirksame feste oder flüssige Agentien sind beispielsweise aufgeführt in: J. Brandrup, E. H. Immergut, Polymer Handbook, J. Wiley and Sons, New York, Chichester, Brisbane, Toronto, Singapure 1989, II/94 ff. Hierzu gehören unter anderem Anthracen, 2-Jodpropan, N,N-Dimethylanilin, Tetrachlorkohlenstoff, 1-Butanthiol, Tetrabromkohlenstoff.

Gemäß der Erfindung können die Komponenten A) und B) vor dem Schmelzen des Ethylenpolymerisates hoher Dichte mit diesem vermischt werden, wobei in der ersten Stufe die Zugabe der Komponenten A) und B) und in der zweiten Stufe die Zugabe weiterer Verarbeitungshilfsstoffe wie beispielsweise Stabilisatoren, Gleit- oder Farbmittel erfolgt.

Schließlich kann erfindungsgemäß eine Formmasse auf der Grundlage von Ethylenpolymerisaten hoher Dichte die nach dem genannten Verfahren hergestellten Polymerisate enthalten.

Das erfindungsgemäße Verfahren zeichnet sich dadurch aus, daß es auf der Grundlage gegebener Ethylenpolymerisate hoher Dichte zu Produkten mit erhöhter Spannungsrißbeständigkeit bei hoher Steifigkeit und Zähigkeit führt.

Nachstehend soll die Erfindung an einigen ausgewählten Ausführungsbeispielen näher erläutert werden.

**Beispiel 1** (Vergleichsbeispiel)

Ein nach dem Gasphasenverfahren hergestelltes Ethylenpolymerisat hoher Dichte mit einer Dichte bei 23 °C von 0,943 g/cm$^3$ und einem Schmelzindex bei 190 °C und einer Belastung von 49 N von 0,75 g/10 min wurde als Pulver entsprechend den Angaben der Tabelle 1 auf einem Zweischneckenkneter mit einem Schneckendurchmesser von 30 mm bei der in der Tabelle 2 angegebenen Umsetzungstemperatur zu Granulat verarbeitet.

An dem erhaltenen Granulat wurden die in der Tabelle 2 angeführten Kennwerte für die Dichte bei 23 °C (DIN 53 479) und den Schmelzindex bei 190 °C und einer Belastung von 212 N (DIN 53 735) ermittelt.

An aus dem Granulat hergestellten normgerechten Prüfkörpern wurden die in der Tabelle 3 zusammengestellten anwendungstechnischen Kennwerte bezüglich Zug-E-Modul (DIN 53 457), Kerbschlagzähigkeit nach Izod (DIN 53 453) bei Temperaturen von + 20 °C und - 20 °C, Kugeldruckhärte (DIN 53 456) und Oxidations-Induktionszeit (OIT, DIN EN 728) bestimmt.

Die Ermittlung der Spannungsrißbeständigkeit, deren Ergebnisse ebenfalls in der Tabelle 3 aufgeführt sind, erfolgte nach einem modifizierten Zeitstandzugversuch analog DIN 53 449, Teil 2, an aus Preßplatten der Abmessung 300 mm x 300 mm x 10 mm hergestellten Prüfkörpern der Größe 110 mm x 10 mm x 10 mm. Als Prüfmedium diente Ethylenglykol bei einer Prüftemperatur von 80 °C und einer Belastung von 5 kp. Der Quotient

$$Q = \frac{t_p}{t_s}$$

aus der beobachteten Standzeit der aktuellen Probe $t_p$ in Stunden und der beobachteten Standzeit des Standards $t_s$ in Stunden ist als Kenngröße in Tabelle 3 aufgeführt. Als Standard diente das Polymerisat des Beispiels 1.

**Beispiel 2**

In diesem Beispiel wurde erfindungsgemäß ein Ethylenpolymerisat hoher Dichte mit einer Komponente A) umgesetzt.

Als Ethylenpolymerisat hoher Dichte diente das in Beispiel 1 verwendete Pulver. Die Komponente A) wurde als 2-Ethylhexylacrylat mit einer C-Zahl in der Seitenkette von 8 und einer Funktionalität (nach H.-G. Elias: Makromoleküle, Bd. 1, Hüthig und Wepf-Verlag, Basel, Heidelberg, New York, 1990, S. 184) bezüglich der polymerisationsfähigen Gruppen von 2 ausgewählt.

Die Zusammensetzung der eingesetzten Mischung entsprach den Angaben der Tabelle 1. Die Umsetzung erfolgte ebenfalls in dem Zweischneckenkneter des Beispiels 1 bei der in Tabelle 2 aufgeführten Temperatur.

Die Ergebnisse der Prüfungen des erhaltenen Polymerisates sind in den Tabellen 2 und 3 zusammengefaßt.

Es ist ersichtlich, daß sich dieses Polymerisat gegenüber dem des Beispiels 1 durch eine wesentlich höhere Spannungsrißbeständigkeit bei guter Steifigkeit und verbesserter Zähigkeit auszeichnet, obwohl nur geringste Mengen der Komponente A), bezogen auf die Gesamtmischung, eingesetzt wurden.

**Beispiel 3**

Hier wurde erfindungsgemäß ein Ethylenpolymerisat hoher Dichte mit einem Gemisch der Komponenten A) und B) umgesetzt.

Für die Komponente A) wurde 2-Ethylhexyl-acrylat verwendet. Als Komponente B) wurde das als Kettenüberträger wirksame feste Agens Tetrabromkohlenstoff ausgewählt und in den in Tabelle 1 angegebenen Mengen in der Komponente A) gelöst. Die Umsetzung entsprechend den Mengenangaben in der Tabelle 1 erfolgte analog dem Beispiel 1 bei der in Tabelle 2 angegebenen Temperatur.

Die Eigenschaften des nach diesem Verfahren hergestellten Polymerisates sind in den Tabellen 2 und 3 zusammengestellt. Sie weisen gegenüber dem Vergleichsbeispiel 1 eine wesentlich verbesserte Spannungsrißbeständigkeit bei sogar erhöhter Zähigkeit und gutem Zug-E-Modul auf und zeigen insbesondere keine verkürzten Oxidations-Induktionszeiten.

**Beispiel 4**

In diesem Beispiel wurde analog dem Beispiel 3 mit den in Tabelle 1 angeführten Komponenten und Mengen verfahren.

Die Eigenschaften der hiernach hergestellten Produkte sind in den Tabellen 2 und 3 angegeben.

Auch diese Polymerisate zeichnen sich im Vergleich zu denen des Beispiels 1 durch eine sehr hohe Spannungsrißbeständigkeit bei guter Steifigkeit und deutlich angestiegener Kerbschlagzähigkeit aus.

**Beispiel 5 (Vergleichsbeispiel)**

Das Ethylenpolymerisat hoher Dichte des Beispiels 1 wurde zusammen mit Verarbeitungshilfsstoffen in den in der Tabelle 1 aufgeführten Mengen in einem Zweischneckenextruder mit einem Schneckendurchmesser von 25 mm bei der in Tabelle 2 angegebenen Temperatur umgesetzt.

Als Verarbeitungshilfsstoffe wurden 0,1 Masseprozent Calciumstearat, 6,0 Masseprozent Rußbatch und 0,3 Masseprozent eines üblichen Stabilisatorgemisches aus Pentaerythrityltetrakis-[3-(3,5-di-tert.-butyl-4-hydroxyphenyl) propionat] und Tris-(2,4-di-tert.-butylphenyl)phosphit verwendet.

Die Ergebnisse der Prüfung der Produkteigenschaften enthalten die Tabellen 2 und 3. Als Standard für die Spannungsrißbeständigkeit fand das Polymerisat dieses Beispiels Anwendung.

**Beispiel 6**

Es wurde analog dem Beispiel 5, jedoch unter Verwendung einer Komponente A) und einer Komponente B), vorgegangen. Als Komponente A) wurde 2-Ethylhexylacrylat und als Komponente B) Tetrabromkohlenstoff in den in Tabelle 1 aufgeführten Mengen eingesetzt. Die in den Tabellen 2 und 3 zusammengestellten Prüfergebnisse belegen im Vergleich zu Beispiel 5, daß auch in Gegenwart von Verarbeitungshilfsstoffen deutlich erhöhte Spannungsrißbeständigkeiten bei hoher Steifigkeit und verbesserter Zähigkeit erhalten werden können.

Beispiel 7 (Vergleichsbeispiel)

Hier wurde gleichfalls entsprechend dem Beispiel 6 verfahren, jedoch wurde als Komponente A 1,1,1-Trimethylolpropantrimethacrylat als (Meth)acrylat mit einer Funktionalität bezüglich der polymerisationsfähigen Gruppen von 6 ohne Zusatz der Komponente B) und ohne Verwendung von Rußbatch in den in Tabelle 1 genannten Mengen bei der in Tabelle 2 angegebenen Temperatur umgesetzt.

Aus den in den Tabellen 2 und 3 angegebenen Prüfergebnissen ist ersichtlich, daß bei nicht erfindungsgemäßer Verfahrensweise zwar Produkte mit einer hohen Steifigkeit erhalten werden können, die Spannungsrißbeständigkeit und gleichfalls die Zähigkeit aber stark verschlechtert sind.

Tabelle 1

Zusammenfassung der eingesetzten Mischungen

Tabelle 1

EP 0 739 908 B1

| Beispiel Nr. | Komponente A Art | Konzentration [Masseprozent, bezogen auf die Gesamtmischung] | Komponente B Art | Konzentration [Masseprozent, bezogen auf die Komponente A)] | Ethylen-polymerisat hoher Dichte [Masseprozent, bezogen auf die Gesamtmischung] | Verarbeitungs-hilfsstoffe [Masseprozent, bezogen auf die Gesamtmischung] |
|---|---|---|---|---|---|---|
| 1 | - | - | - | - | 100 | - |
| 2 | 2-Ethylhexyl-acrylat | 0,6 | - | - | 99,4 | - |
| 3 | 2-Ethylhexyl-acrylat | 0,4 | Tetrabrom-kohlenstoff | 0,1 | 99,6 | - |
| 4 | 2-Ethylhexyl-acrylat | 0,4 | Tetrabrom-kohlenstoff | 0,6 | 99,6 | - |
| 5 | - | - | - | - | 93,6 | 6,4 |
| 6 | 2-Ethylhexyl-acrylat | 0,6 | Tetrabrom-kohlenstoff | 0,6 | 93,0 | 6,4 |
| 7 | 1,1,1-Tri-methylolpropan-trimethacrylat | 0,3 | - | - | 99,3 | 0,4 |

Tabelle 2

Umsetzungstemperaturen, Dichten und Schmelzindices der hergestellten Mischungen

| Beispiel Nr. | Umsetzungs- temperatur [°C] | Dichte bei 23 °C [g/cm$^3$] | Schmelzindex bei 190 °C und einer Belastung von 212 N [g/10 min] |
|---|---|---|---|
| 1 | 235 | 0,943 | 10,5 |
| 2 | 234 | 0,942 | 7,5 |
| 3 | 237 | 0,943 | 8,5 |
| 4 | 235 | 0,943 | 8,2 |
| 5 | 235 | 0,953 | 13,1 |
| 6 | 228 | 0,953 | 13,1 |
| 7 | 240 | 0,944 | 14,2 |

Tabelle 2

EP 0 739 908 B1

Tabelle 3

Eigenschaften der hergestellten Mischungen

| Beispiel Nr. | Q | Zug-E-Modul [N/mm²] | Kerbschlagzähigkeit (Izod) [KJ/m²] +20 °C | -20 °C | Kugeldruck- härte (30 ") [N/mm²] | OIT (150 °C) [min] |
|---|---|---|---|---|---|---|
| 1 | 1 | 878 | 13,1 | 6,0 | 41 | 22 |
| 2 | 1,5 | 715 | 13,8 | 7,3 | 36 | 24 |
| 3 | 1,5 | 722 | 13,9 | 6,8 | 37 | 23 |
| 4 | 1,75 | 778 | 14,6 | 8,3 | 36 | 22 |
| 5 | 1 | 880 | 12,1 | 5,5 | 39 | 25* |
| 6 | 1,29 | 836 | 13,4 | 6,8 | 37 | 22* |
| 7 | 0,36 | 818 | 9,0 | 3,8 | - | - |

* gemessen bei 210 °C

**Patentansprüche**

1. Verfahren zur Herstellung von Ethylenpolymerisaten hoher Dichte mit erhöhter Spannungsrißbeständigkeit, dadurch gekennzeichnet, daß ein Ethylenpolymerisat hoher Dichte mit einer Dichte bei 23 °C von 0,935 bis 0,970 g/cm$^3$ und einem Schmelzindex bei 190 °C und einer Belastung von 49 N von 0,01 bis 80 g/10 min in der Schmelze bei einer Temperatur von 160 bis 270 °C mit Reaktionszeiten, die dem Durchgang in Schneckenextrudern üblicherweise entsprechen, unter Zusatz von

A) 0,05 bis 5 Masseprozent, bezogen auf die Gesamtmischung, von (Meth)acrylaten mit einer C-Zahl in der Seitenkette von 2 bis 16 und einer Funktionalität bezüglich der polymerisationsfähigen Gruppen von 2 und
B) 0 bis 15 Masseprozent, bezogen auf die Komponente A), eines als Kettenüberträger wirksamen festen oder flüssigen Agens

und eingehender Homogenisierung der Mischung ohne Zusatz von Peroxiden umgesetzt wird.

2. Verfahren nach Anspruch 1, dadurch gekennzeichnet, daß das Ethylenpolymerisat hoher Dichte eine Dichte bei 23 °C von 0,940 bis 0,960 g/cm$^3$ aufweist.

3. Verfahren nach den Ansprüchen 1 und 2, dadurch gekennzeichnet, daß das Ethylenpolymerisat hoher Dichte einen Schmelzindex bei 190 °C und einer Belastung von 49 N von 0,05 bis 35 g/10min besitzt.

4. Verfahren nach den Ansprüchen 1 bis 3, dadurch gekennzeichnet, daß die Mischung bei einer Temperatur von 180 bis 260 °C umgesetzt wird.

5. Verfahren nach den Ansprüchen 1 bis 4, dadurch gekennzeichnet, daß als Komponente A) 0,1 bis 2 Masseprozent, bezogen auf die Gesamtmischung, von (Meth)acrylaten mit einer C-Zahl in der Seitenkette von 4 bis 10 und einer Funktionalität bezüglich der polymerisationsfähigen Gruppen von 2 eingesetzt werden.

6. Verfahren nach den Ansprüchen 1 bis 5, dadurch gekennzeichnet, daß als Komponente B) 0,1 bis 10 Masseprozent, bezogen auf die Komponente A), eines als Kettenüberträger wirksamen festen oder flüssigen Agens verwendet wird.

7. Verfahren nach den Ansprüchen 1 bis 6, dadurch gekennzeichnet, daß als Komponente B Tetrabromkohlenstoff verwendet wird.

8. Verfahren nach den Ansprüchen 1 bis 7, dadurch gekennzeichnet, daß die Komponenten A) und B) vor dem Schmelzen des Ethylenpolymerisates hoher Dichte mit diesem vermischt werden.

9. Verfahren nach den Ansprüchen 1 bis 8, dadurch gekennzeichnet, daß das Ethylenpolymerisat hoher Dichte einem zweistufigen Schmelzprozeß unterzogen wird, wobei in der ersten Stufe die Zugabe der Komponenten A) und B) und in der zweiten Stufe die Zugabe weiterer Verarbeitungshilfsstoffe wie beispielsweise Stabilisatoren, Gleit- oder Farbmittel erfolgt.

10. Ethylenpolymerisate hoher Dichte mit erhöhter Spannungsrißbeständigkeit, erhältlich durch Umsetzung in der Schmelze eines Ethylenpolymerisates hoher Dichte mit einer Dichte bei 23 °C von 0,935 bis 0,970 g/cm$^3$ und einem Schmelzindex bei 190 °C und einer Belastung von 49 N von 0,01 bis 80 g/10 min mit 0,05 bis 5 Masseprozent, bezogen auf die Gesamtmischung,von (Meth)acrylaten mit einer C-Zahl in der Seitenkette von 2 bis 16 und einer Funktionalität bezüglich der polymerisationsfähigen Gruppen von 2 als Komponente A) und 0 bis 15 Masseprozent, bezogen auf die Komponente A) eines als Kettenüberträger wirksamen festen oder flüssigen Agens ohne Zusatz von Peroxiden.

11. Formmasse auf der Grundlage von Ethylenpolymerisaten hoher Dichte, enthaltend die nach den Verfahren der Ansprüche 1 bis 10 hergestellten Polymerisate.

**Claims**

1. A process to produce high-density ethylene polymers with an increased resistance to stress cracking whereby a high-density ethylene polymer of a density of 0.935 to 0.970 g/cm$^3$ at 23°C and with a melt-flow index of 0.01 to 80 g/10 mins.at 190°C and at a load of 49 N is converted in the melt at a temperature of 160 to 270°C at reaction rates common of screw-type extruders, with an addition of

A) 0.05 to 5 percent by weight relative to the overall mixture of (meth)acrylates with a carbon number in the side chain of 2 to 16, and with a functionality in relation to the polymerizable groups of 2; and

B) 0 to 15 percent by weight relative to component A) above of a solid or liquid chain transfer agent

and through thorough homogenisation of the mixture without any addition of peroxides.

2. A process according to claim 1 above, whereby the high-density ethylene polymer has a density at 23°C of 0.940 to 0.960 g/cm³.

3. A process according to claims 1 and 2 above, whereby the high-density ethylene polymer has a melt-flow index of 0.05 to 35 g/10 mins. at 190°C and at a load of 49 N.

4. A process according to claims 1 thru 3 above, whereby the mixture is converted at a temperature of 180°C to 260°C.

5. A process according to claims 1 thru 4 above, whereby 0.1 to 2 percent by weight, relative to the overall mixture, of (meth)acrylates with a carbon number in the side chain of 4 to 10 and with a functionality in relation to the polymerizable groups of 2 are used as component A).

6. A process according to claims 1 thru 5 above, whereby 0.1 to 10 percent by weight, relative to component A), of a solid or liquid chain transfer agent are used as component B).

7. A process according to claims 1 thru 6 above, whereby tetrabromomethane is used as component B.

8. A process according to claims 1 thru 7 above, whereby components A) and B) are mixed with the high-density ethylene polymer prior to the latter melting.

9. A process according to claims I thru 8 above, whereby the high-density ethylene polymer is subjected to a two-stage melting process whereby components A) and B) are added in the first stage, and more auxiliary processing substances such as stabilizers, lubricants or colorants are added in the second stage.

10. High-density ethylene polymers with an increased resistance to stress cracking, obtained through conversion in the melt of a high-density ethylene polymer with a density of 0.935 to 0.970 g/cm³ at 23°C and with a melt-flow index of 0.01 to 80 g/10 mins. at 190°C and a load of 49 N with 0.05 to 5 percent by weight, relative to the overall mixture of (meth)acrylates, with a carbon number in the side chain of 2 to 16, and with a functionality in relation to the polymerizable groups of 2 as component A), and with 0 to 15 percent by weight, relative to component A), of a solid or liquid chain transfer agent, without any addition of peroxides.

11. Moulding material based on high-density ethylene polymers containing the polymers made according to the process of claims 1 thru 10.

**Revendications**

1. Procédé de fabrication de polymérisats d'éthylène de haute densité à résistance plus élevée à la fissure sous tension, caractérisé par le fait qu'est transformé un polymérisat d'éthylène de haute densité, ayant une densité de 0,935 jusqu'à 0,970 g/cm³ par 23 °C et un indice de fusion par 190 °C et une charge de 49 N de 0,01 jusqu'à 80 g/10 mn dans la matière fondue par une température de 160 à 270 °C avec des temps de réaction qui habituellement correspondent à ceux de passage dans les extrudeuses, avec un supplément de

A) 0,05 à 5 pour cent en poids, rapporté au mélange total, de (méth) acrylates avec un indice C dans la chaîne latérale de 2 jusqu'à 16 et une fonctionnalité de 2 par rapport aux groupes aptes à la polymérisation et de

B) 0 à 15 pour cent en poids, rapporté au constituant A) d'un agent solide ou liquide efficace pour le transfert de chaîne

ainsi qu'une homogénéisation du mélange se faisant sans supplément de peroxydes.

2. Procédé selon la revendication 1, caractérisé par le fait que le polymérisat d'éthylène de haute densité présente une densité par 23 °C de 0,940 à 0,960 g/cm³.

3. Procédé selon les revendications 1 et 2, caractérisé par le fait que le polymérisat d'éthylène de haute densité possède un indice de fusion par 190 °C et une charge de 49 N de 0,05 à 35 g/10mn.

4. Procédé selon les revendications de 1 à 3, caractérisé par le fait que le mélange est converti par une température de 180 à 260 °C.

5. Procédé selon les revendications de 1 à 4, caractérisé par le fait que sont utilisés comme constituant A) des (méth) acrylates de 0,1 à 2 pour cent en poids, rapportés au mélange total, avec un indice C dans la chaîne latérale de 4 jusqu'à 10 et une fonctionnalité de 2 par rapport aux groupes aptes à la polymérisation.

6. Procédé selon les revendications de 1 à 5, caractérisé par le fait qu'est utilisé comme constituant B) un agent solide ou liquide efficace pour le transfert de chaîne de 0,1 à 10 pour cent en poids par rapport au constituant A).

7. Procédé selon les revendications de 1 à 6, caractérisé par le fait qu'est utilisé comme constituant B) du tétrabromure de carbone.

8. Procédé selon les revendications de 1 à 7, caractérisé par le fait qu'avant la fusion du polymérisat d'éthylène de haute densité les constituants A) et B) seront mélangés avec celui-ci.

9. Procédé selon les revendications de 1 à 8, caractérisé par le fait que le polymérisat d'éthylène de haute densité est soumis à un processus de fusion de deux étapes, l'addition des constituants A) et B) se faisant dans la première étape et l'addition d'autres adjuvants, comme par exemple de stabilisants, de colorants et de lubrifiants, dans la deuxième.

10. Polymérisats de haute densité avec résistance à la fissure sous tension plus élevée, pouvant être obtenus par transformation dans la fonte d'un polymérisat d'éthylène de haute densité avec une densité par 23 °C de 0,935 à 0,970 g/cm$^3$ et un indice de fusion par 190 °C et une charge de 49 N de 0,01 jusqu'à 80 g/10 mn avec 0,05 à 5 pour cent en poids, par rapport au mélange total, de (méth) acrylates avec un indice C dans la chaîne latérale de 2 jusqu'à 16 et une fonctionnalité de 2 par rapport aux groupes aptes à la polymérisation comme constituant A) et de 0 à 15 pour cent en poids, par rapport au constituant A, d'un agent solide ou liquide efficace pour le transfert de chaîne sans supplément de peroxydes.

11. Matière à mouler à base de polymérisats d'éthylène de haute densité, contenant les polymérisats produits d'après les procédés des revendications de 1 à 10.